# EUROPÄISCHE PATENTSCHRIFT

(11) **EP 2 079 764 B1**
(45) Veröffentlichungstag und Bekanntmachung des Hinweises auf die Patenterteilung: **11.08.2010**
(21) Anmeldenummer: 07765629.6
(22) Anmeldetag: 26.06.2007
(51) Int. Cl.: C08F 8/42, C08F 8/26, C08F 6/02, C08F 293/00, C08F 8/34, C08F 12/00, C08F 20/00, C08F 2/38

(54) **VERFAHREN ZUR HERSTELLUNG VON SILYLTELECHELEN POLYMEREN**
METHOD FOR PRODUCING SILYL TELECHELIC POLYMERS
PROCÉDÉ DE PRODUCTION DE POLYMÈRES SILYL TÉLÉCHÉLIQUES

(30) Priorität: 10.10.2006 DE 102006048154
(43) Veröffentlichungstag der Anmeldung: 22.07.2009
(73) Patentinhaber: Evonik Röhm GmbH, 64293 Darmstadt (DE)
(72) Erfinder: BALK, Sven, 60594 Frankfurt (DE); LÖHDEN, Gerd, 45136 Essen (DE)
(86) Internationale Anmeldenummer: PCT/EP2007/056359
(87) Internationale Veröffentlichungsnummer: WO 2008/043583

(56) Entgegenhaltungen:
- EP-A- 1 598 402
- EP-A1- 0 976 766
- EP-A1- 1 288 230
- EP-A1- 1 452 550
- DE-A1- 3 719 151
- DE-A1- 3 719 151
- DE-A1-102004 055 450
- OTAZAGHINE B ET AL.: "Synthesis of Telechelic Oligomers via Atom Transfer Radical Polymerization, 1 Study of Styrene" MACROMOL CHEM PHYS, Bd. 205, 2004, Seiten 154-164, XP002448351

## Beschreibung

### Gebiet der Erfindung

Die vorliegende Erfindung betrifft die Synthese von Polymeren mit Silylendgruppen, die mittels Atom transfer radical polymerization (im Folgenden kurz ATRP) hergestellt wurden. Ein besonderer Aspekt ist die Herstellung silyltelecheler Polymethacrylate, Polyacrylate oder Polystyrole.

Ein ganz besonderer Aspekt der vorliegenden Erfindung ist, dass durch die Zugabe des Reagenz in einem Verfahrensschritt gleichzeitig eine Entfernung der Übergangsmetallverbindungen aus der Polymerisationslösung mittels Fällung und eine Salzbildung der zuvor an den Übergangsmetall koordinierten Liganden, die wiederum eine einfache Entfernung der selben ermöglicht, erfolgt.

Die ATRP stellt ein wichtiges Verfahren zur Darstellung einer Vielzahl von Polymeren wie z.B. Polyacrylaten, Polymethacrylaten oder Polystyrolen dar. Mit dieser Art der Polymerisation ist man dem Ziel maßgeschneiderter Polymere ein gutes Stück näher gekommen. Die ATRP-Methode wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ= 5.000 - 120.000 g/mol. Ein besonderer Vorteil dabei ist, dass sowohl das Molekulargewicht als auch die Molekulargewichtsverteilung regelbar sind. Als lebende Polymerisation gestattet sie ferner den gezielten Aufbau von Polymerarchitekturen wie beispielsweise statistische Copolymere oder auch Block-Copolymer-Strukturen. Durch entsprechende Initiatoren sind z.B. zusätzlich ungewöhnliche Block-Copolymere und Sternpolymere zugänglich. Theoretische Grundlagen zum Polymerisationsmechanismus sind unter anderem in Hans Georg Elias, Makromoleküle, Band 1, 6.Auflage, Weinheim 1999, S.344 erläutert.

### Stand der Technik

Die Entwicklung eines Verfahrensschrittes in der ATRP, bei dem gleichzeitig das Halogen am Kettenende des Polymers entfernt wird, das Übergangsmetall vollständig gefällt wird, der Ligand in eine leicht abzutrennende ionische Form überführt wird und eine Funktionalisierung der Kettenenden mit organischen Silylgruppen vorgenommen werden kann, ist in keiner Weise Stand der Technik. Dies gilt allein schon für die Kombination aus der gleichzeitigen Übergangsmetallfällung und Silylfunktionalisierung der Kettenenden.

Im Weiteren stellt die vorliegende Erfindung jeweils für sich allein eine deutliche Verbesserung gegenüber dem Stand der Technik sowohl bezüglich der Endgruppenfunktionalisierung, bezüglich der Halogenentfernung als auch bezüglich der Übergangsmetallfällung dar. Eine Kombination aus allen drei Funktionen ist im Stand der Technik bis dato nicht beschrieben. Im Folgenden wird diese Schrift daher auf die Aspekte Endgruppenfunktionalisierung bzw. silylfunktionalisierte ATRP-Produkte beschränkt.

Der ATRP-Prozess beruht auf einem Redoxgleichgewicht zwischen einer schlafenden und einer aktiven Spezies. Bei der aktiven Spezies handelt es sich um die nur in geringer Konzentration vorliegende wachsende, radikalische Polymerkette sowie eine Übergangsmetallverbindung in höherer Oxidationsstufe (z.B. Kupfer II). Die schlafende, bevorzugt vorliegende Spezies ist die Kombination aus der mit einem Halogen bzw. einem Pseudohalogen terminierten Polymerkette und der entsprechenden Übergangsmetallverbindung in geringerer Oxidationsstufe (z.B. Kupfer I). Dies gilt sowohl für die ATRP in der eigentlichen Form, die mit (Pseudo-)Halogen substituierten Initiatoren gestartet wird, als auch für die weiter unten beschriebene reverse ATRP, bei der das Halogen erst bei Einstellung des Gleichgewichts an die Polymerkette gebunden wird. Das Halogenatom verbleibt unabhängig von dem gewählten Verfahren nach Abbruch der Reaktion an den jeweiligen Kettenenden. Diese endständigen Halogenatome können in mehrfacher Hinsicht von Nutzen sein. In einer großen Zahl von Schriften wird die Verwendung eines solchen Polymers als Makroinitiator nach einer Aufreinigung oder durch sequentielle Zugabe weiterer Monomerfraktionen zum Aufbau von Blockstrukturen beschrieben. Als repräsentatives Beispiel sei auf US 5,807,937 bzgl. der sequentiellen Polymerisation und auf US 6,512,060 bzgl. der Synthese von Makroinitiatoren verwiesen.

Problematisch ist jedoch die dem Fachmann durchaus bekannte thermische Instabilität solcher Halogen-funktionalisierter Polymere. Insbesondere Polymethacrylate bzw. Polyacrylate erweisen sich bei Vorhandensein terminaler Halogenatome deutlich empfindlicher gegenüber einer Depolymerisation. Daher ist eine Methode zur Entfernung dieser endständigen Halogenatome von großem Interesse. Ein weit verbreitetes Verfahren basiert auf der Substitution der Halogene mit Metallalkoholaten unter Fällung des gebildeten Metallhalogenids. Ein solches Verfahren wird zum Beispiel in US 2005/0090632 beschrieben. Nachteil an diesem Vorgehen ist die nur begrenzte Verfügbarkeit der Metallalkoholate, deren Kosten und dass das Verfahren nur nach einer Reinigung der Polymere in einem separaten Prozessschritt durchgeführt werden kann. Außerdem ist auf diesem Weg die direkte Funktionalisierung mit einer Silylgruppe nicht möglich.

In EP 0 976 766 bzw. in EP 1 179 567 wird ein dreistufiges Verfahren zur Synthese silylterminierter, halogenfreier Polymere beschrieben. Nach einer ATRP mit entsprechender Produktreinigung wird in einem zweiten Schritt die Substitution der endständigen Halogenatome mit einem ungesättigten Metallalkoholat durchgeführt. Doppelbindungen hydrosilyliert. Dem Fachmann ist leicht ersichtlich, dass diese drei Prozessschritte nicht ohne eine gründliche Reinigung der jeweiligen Vorstufenprodukte möglich sind. Auch wenn man mit diesem Verfahren Polymere erhält, die den erfindungsgemäßen sehr ähnlich sind, unterscheiden sich diese Produkte durch eine verminderte Anzahl von zusätzlich in die Kette einbaubaren Funktionalitäten, die entweder bei der Substitution oder bei der Hydrosilylierung stören würden. In US 2005/0113543 wird in einer Variante ein ungesättigter ATRP-Initiator verwendet und analog zu dem zuvor beschriebenen Verfahren in einer zweiten Stufe eine Allylgruppe mittels einer Organozinnverbindung durch Substitution des Halogenatoms an das zweite Kettenende übertragen. Beide, sich in Ihrer chemischen Umgebung nur leicht von einander unterscheidenden Gruppen können darauf leicht hydrosilyliert werden.

Ähnliches gilt auch für andere Verfahren zur Substitution der endständigen Halogengruppen: Sowohl Azide (s. Matyjaszewski et al., Macromol. Rapid Commun, 18, 1057-66. 1997) als auch Phosphine (Coessens, Matyjaszewski, Macromol. Sci. Pure Appl. Chem., 36, 653-666, 1999) führen nur zu unvollständigen Umsätzen, sind toxikologisch sehr bedenklich, sind zur direkten Silylfunktionalisierung schlecht geeignet und sind kostenintensiv. Ferner sind auch diese Verfahren nur in einer polymeranalogen Reaktion nach einer Produktaufarbeitung anwendbar.

Eine Alternative zur zweistufigen Polymerisation und anschließenden Substitution der endständigen Halogenatome zur Synthese der zur Hydrosilylierung benötigten Präpolymere ist das so genannte Endcapping. Bei dieser Methode werden der Polymerisationslösung zu einem Zeitpunkt eines möglichst vollständigen Umsatzes Verbindungen zugesetzt, die wie Monomere an das Kettenende radikalisch eingebaut werden, darauf jedoch ein neues, zwar weiterhin halogenfunktionalisiertes, jedoch polymerisationsinaktives Kettenende bilden. In EP 1 085 027 bzw. EP 1 024 153 werden diverse nicht konjugierte Diene als solche Endcapper beschrieben. Insbesondere Octadien wird als besonders geeignete Verbindung zur Realisierung olefinischer Endgruppen aufgeführt. In EP 1 158 006 wird auch Cyclooctadien als gut geeignetes Reagenz erwähnt. Telechele mit zwei identischen Endgruppen sind mittels ATRP durch Verwendung bifunktioneller Initiatoren erreichbar.

Vorteil dieser Methode ist, dass ein getrennter Verfahrensschritt mit vorhergehender Produktreinigung wie bei der Substitution entfällt und direkt am Ende der Polymerisation die Kettenenden olefinisch funktionalisiert werden. Nachteilig gegenüber der Substitution und damit auch der vorliegenden Erfindung ist jedoch, dass das Halogenatom am Kettenende verbleibt und entweder getrennt durch einen zusätzlichen Verfahrensschritt entfernt werden müsste oder man eine höhere thermische Instabilität des Produktes in Kauf nimmt. Ferner erhält man auch bei diesem Vorgehen wie auch bei den zuvor beschriebenen Substitutionsverfahren lediglich olefinisch terminierte Produkte, die nach einer aufwendigen Reinigung erst hydrosilyliert werden müssen. Diese Reinigung muss insbesondere äußerst gründlich durchgeführt werden, da die in der ATRP benötigten Liganden zur Solvatation der Übergangsmetallverbindung die in der Regel auf Platinverbindungen basierenden Hydrosylilierungskatalysatroen - wie z.B. den als Standard anzusehenden Karstedt-Katalysator - deaktivieren. Besonders effizient und wirtschaftlich interessant ist die ATRP z.B. bei Verwendung von mehrzähnigen Aminliganden, wie Sie weiter unten in dieser Schrift genauer beschrieben werden. Insbesondere diese Verbindungen deaktivieren jedoch die nur in geringsten Konzentrationen einzusetzenden Platinmetallkatalysatoren quantitativ und müssen daher vorher aus dem Polymer vollständig entfernt werden. Diese Aspekte machen eine vollständige Silylfunktionalisierung der Polymere eher unwahrscheinlich bzw. machen das Verfahren zusätzlich zeitaufwendig und unwirtschaftlich. Die Hydrosilylierung der beschriebenen Polymere ist in EP 1 153 942 bzw. in EP 1 498 433 nachzulesen.

Erfindungsgemäß wird zur Substitution der endständigen Halogenatome ein Mercaptan mit zusätzlicher Silanfunktionalität eingesetzt. Einzig in Snijder et al. (J. of Polym. Sci.: Part A: Polym. Chem., 40, S.2350-59, 2002) wird eine solche Substitutionsreaktion an einem ATRP-Produkt mit einem Mercaptan kurz beschrieben. Diese Substitutionsreaktion wird hier ausschließlich mit Mercaptoethanol durchgeführt. Eine Übertragung des Verfahrens auf die erfindungsgemäßen Silylmercaptane wird nicht beschrieben.

Ein weiterer Unterschied zu der vorliegenden Erfindung ist die polymeranaloge Durchführung. In der beschriebenen Schrift wird die Substitutionsreaktion erst nach Aufreinigung des ATRP-Produktes in einer zweiten Reaktionsstufe durchgeführt. Damit ergibt sich direkt ein zweiter wichtiger Unterschied zur vorliegenden Erfindung. Der erfindungsgemäße Effekt der Fällung der Übergangsmetallverbindungen aus der ATRP-Lösung durch Zugabe von Mercaptanreagenzien wird in dieser Schrift entsprechend gar nicht beschrieben. Darüber hinaus werden in der vorliegenden Erfindung im Gegensatz zu der zitierten Schrift neuartige beidseitig an den Endgruppen funktionalisierte Tri- und Pentablockcopolymere beschrieben.

Ein großer Nachteil der Bindemittel für Klebstoffe des Standes der Technik ist die bei der Verarbeitung relevante, hohe Viskosität. Dadurch ist ein Verarbeiten eines Klebstoffes oder eines geschmolzenen Reaktivschmelzklebstoffs, vor allem das Auftragen auf poröse Substrate, deutlich erschwert. Teilweise tritt auch eine vorzeitige Vergelung der Klebstoffformulierung auf.

Ein weiterer Nachteil ist, dass der extrahierbare Anteil im ausgehärteten Klebstoff recht hoch ist. Dies verringert unter anderem die Beständigkeit der Klebmasse gegenüber Lösungsmitteln.

Ein weiterer Nachteil ist eine häufig nur ungenügende Viskositätsstabilität des Klebstoffs bzw. des Reaktivschmelzklebstoffs in der Schmelze bei z.B. 130 °C, wodurch vor allem die Verarbeitbarkeit erschwert wird.

Weiterhin nachteilig ist, dass die freiradikalisch polymerisierten Materialien auch einen höheren Anteil niedermolekularer Bestandteile, die an den Vernetzungsreaktionen nicht teilnehmen und den extrahierbaren Bestandteil entsprechender Formulierungen darstellen, enthalten.

Die oben beschriebenen Probleme wurden in WO 2005/047359 insofern gelöst, dass durch Anwendung einer kontrollierten Polymerisationsmethode, in Form der ATRP, Bindemittel mit sehr engen Molekulargewichtsverteilungen zur Verfügung gestellt werden konnten, die durch den gegenüber freiradikalisch polymerisiert (Meth)acrylaten einen nur geringen Anteil hochmolekularer Bestandteile aufweisen. Diese Bestandteile bewirken in Polymermischungen insbesondere eine Erhöhung der Viskosität. Weiterhin enthalten diese Polymere auch einen deutlich geringeren Anteil niedermolekularer und damit extrahierbarer Bestandteile. Der geringere Anteil solcher Bestandteile erhöht die Wetterbeständigkeit, Verlangsamt die Produktalterung und führt zu einer deutlich verbesserten Chemikalienbeständigkeit.

Nachteil der nach Stand der Technik dargestellten Klebstoffe ist jedoch eine statistische Verteilung der funktionellen, für die spätere Aushärtung benötigten Gruppen in der Polymerkette des Bindemittels. Dies führt zu einer engmaschigen Vernetzung und einer somit verminderten Elastizität der Klebemasse. Daraus kann auch eine Verschlechterung der Substratbindung resultieren. Vorteil der Verwendung von telechelen Bindemitteln und damit der vorliegenden Erfindung ist, dass die späteren Polymernetzwerke, in denen eine Komponente nur über die Kettenendgruppen eingebaut ist, eine besondere Flexibilität aufweisen. Diese erhöhte Flexibilität bei gleichzeitig höherer Beständigkeit ist auch in anderen Anwendungsbereichen wie zum Beispiel bei Dichtstoffen von sehr großer Bedeutung.

In EP 1 452 550 ist die Copolymerisation von silylfunktionellen Monomeren in einer Reversible Addition Fragmentation chain Transfer polymerization (RAFT) offenbart. Auch nach diesem Verfahren sind die funktionellen Gruppen jedoch statistisch auf zumindest 20% der Polymerketten verteilt.

Bei Otazaghine et al. (Macromol. Chem. Phys, 205, 2, S. 154-164, 2004) ist die Bildung von funktionellen Endgruppen über eine modifizierte ATRP, bei der mit einem silylfunktionellen Initiator gestartet wird und nach der Polymerisation jeweils zwei Ketten an den halogenfunktionellen Kettenenden miteinander gekuppelt werden, offenbart. Nachteile dieses Verfahrens sind die schlechte Verfügbarkeit silylfunktioneller ATRP-Initiatoren und der geringe Kupplungsgrad, der zu einem hohen Anteil monofunktioneller Bestandteile im Endprodukt führt.

In DE 37 19 151 wird ein Verfahren zur Silylfunktionalisierung von PVC beschrieben, bei dem PVC mit silylfunktionellen Mercaptanen umgesetzt wird. Diese Verfahren ist jedoch nicht auf Polyacrylate, -methacrylate bzw. -styrole übertragbar. Ferner ist es weder zur Entfernung von Katalysatoren, noch zur gezielten Funktionalisierung von Kettenenden geeignet.

### Aufgabe

Aufgabe der vorliegenden Erfindung ist es, Polymere mittels Atom transfer radical polymerization (ATRP) herzustellen, die an über 90% der zuvor polymerisationsaktiven Kettenenden Silylgruppen aufweisen.

Zusätzlich ist es Aufgabe der vorliegenden Erfindung, Polymere mittels ATRP herzustellen, die keine oder nur in Spuren Halogene bzw. Pseudohalogene enthalten. Damit ist es auch Aufgabe, die thermische Stabilität dieser Polymere gegenüber halogenhaltigen Produkten zu verbessern.

Insbesondere ist es Aufgabe dieser Erfindung, Polymere zu realisieren, die mit Ausnahme der Endgruppen vollständig den Materialien entsprechen, die nach Stand der Technik mittels ATRP hergestellt werden können. Dies umfasst u.a. die Polymerarchitektur, das Molekulargewicht und die Molekulargewichtsverteilung.

Unter Molekulargewicht bzw. Molekulargewichtsverteilung werden im Weiteren die Werte für das Molekulargewicht bzw. die Molekulargewichtsverteilung verstanden, die mittels Gelpermeationschromatographie (kurz GPC oder SEC) bestimmt wurden.

Mit dem Begriff Polymerarchitektur werden im Weiteren sämtliche Polymerstrukturen umschrieben. Als Beispiele seinen Blockcopolymere, Sternpolymere, Telechele, Gradientencopolymere, statistische Copolymere oder Kammcopolymere aufgeführt.

Insbesondere ist es Aufgabe dieser Erfindung, die Silylfunktionalisierung und die gleichzeitige Halogenentfernung im Rahmen eines großtechnisch einfach zu realisierenden und wirtschaftlichen Prozesses durchzuführen. Ganz insbesondere ist es Aufgabe, die Funktionalisierung ohne zusätzliche Produktaufarbeitung direkt am Ende des eigentlichen ATRP-Prozesses im gleichen Reaktionsgefäß durchzuführen (one-potreaction).

Parallel ist es eine Aufgabe dieser Erfindung, mit dem gleichen Verfahrensschritt gleichzeitig ein großtechnisch realisierbares Verfahren zur Abtrennung von Übergangsmetallkomplexen aus Polymerlösungen zur Verfügung zu stellen. Zugleich soll das neue Verfahren kostengünstig und schnell durchführbar sein. Darüber hinaus war es Aufgabe der vorliegenden Erfindung, ein Verfahren zur Verfügung zu stellen, das ohne aufwändige Umbauten auf bekannten, zur Lösungspolymerisation geeigneten Anlagen implementiert werden kann. Eine weitere Aufgabe war es, bereits nach einem Filtrationsschritt besonders niedrige Restkonzentrationen der Übergangsmetallkomplexverbindungen zu realisieren.

### Lösung

Gelöst wurde die Aufgabe durch Zugabe geeigneter silylfunktionalisierter Schwefelverbindungen nach oder während des Abbruchs der Polymerisation. Durch Substitution der endständigen aktiven Gruppen eines mittels ATRP synthetisierten Polymers mit der Schwefelverbindung werden die jeweiligen Kettenenden silylfunktionalisiert. Gleichzeitig werden die endständigen Halogenatome von dem Polymer entfernt, die als Katalysator eingesetzte Übergangsmetallkoordinationsverbindung gequencht und damit das Metall nahezu vollständig ausgefällt. Dieses kann anschließend mittels Filtration einfach abgetrennt werden.

Bei den Polymeren handelt es sich um durch Polymerisation von Styrolen, Alkylacrylaten und/oder Alkylmethacrylaten und/oder Mischungen, die überwiegend aus Styrolen, Alkylacrylaten und/oder Alkylmethacrylaten bestehen, erhältlich sind.

Im Detail führt die Zugabe von Mercaptanen zu Halogen terminierten Polymerketten, wie sie während oder am Ende eines ATRP Prozesses vorliegen, zu einer Substitution des Halogens. Am Kettenende des Polymers bildet sich somit eine Thioethergruppe, wie sie bereits aus der freiradikalischen Polymerisation mit auf Schwefel basierenden Reglern bekannt ist. Als Abspaltungsprodukt wird ein Halogenwasserstoff gebildet.

Ein ganz besonderer Aspekt der vorliegenden Erfindung ist, dass durch die Zugabe eines Reagenz in einem Verfahrensschritt gleichzeitig eine Entfernung der endständigen Halogenatome von den Polymerketten, damit einhergehend eine Silylfunktionalisierung der Polymertermini, eine Entfernung der
Übergangsmetallverbindungen mittels Fällung und eine Salzbildung der zuvor an den Übergangsmetall koordinierten Liganden, die wiederum eine einfache Entfernung der Liganden vom Übergangsmetall ermöglicht, erfolgt.

Im Detail erfolgt bei der Zugabe besagter Schwefelverbindung wahrscheinlich folgendes: Als Initiator werden in der ATRP Verbindungen eingesetzt, die eine oder mehrere Atome bzw. Atomgruppen X aufweisen, welche unter den Polymerisationsbedingungen des ATRP-Verfahrens radikalisch übertragbar sind. Bei der Substitution der aktiven Gruppe X am jeweiligen Kettenende des Polymers wird eine Säure der Form X-H freigesetzt. Der sich bildenden Halogenwasserstoff kann in organischen Polymerisationslösungen nicht hydrolysiert werden und verfügt somit über eine besonders ausgeprägte Reaktivität, die zu einer Protonierung der unten beschriebenen, zumeist basischen Liganden an der Übergangsmetallverbindung führt. Dieses Quenchen des Übergangsmetallkomplexes verläuft äußerst schnell und ergibt eine direkte Fällung der nun unmaskierten Übergangsmetallverbindungen.

Das Übergangsmetall fällt dabei in der Regel in der Form aus, in der es am Anfang der Polymerisation eingesetzt wurde: z.B. im Falle von Kupfer als CuBr, CuCl oder Cu₂O. Unter der Bedingung, dass das Übergangsmetall simultan z.B. durch Einleiten von Luft oder durch Zugabe von Schwefelsäure oxidiert wird, fällt die Übergangsmetallverbindung zusätzlich in der höheren Oxidationsstufe aus. Durch die erfindungsgemäße Zugabe besagter Schwefelverbindungen kann die Übergangsmetallfällung im Gegensatz zu dieser oxidationsbedingten Fällung darüber hinaus nahezu quantitativ erfolgen. So gelingt es bereits nach einem Filtrationsschritt besonders niedrige Restkonzentrationen der Übergangsmetallkomplexverbindungen von unter 5 ppm zu realisieren.

Um diesen Effekt zu erreichen, muss der erfindungsgemäße Einsatz besagter Schwefelverbindung bezogen auf die aktive Gruppe X am Polymerkettenende nur in einem Überschuss von z.B. 1,1 Äquivalenten eingesetzt werden. Entsprechendes gilt bezogen auf den Liganden L: Bei Komplexen, in denen das Übergangsmetall und der Ligand im Verhältnis 1:1 vorliegen, genügt ebenfalls ein nur sehr geringer Überschuss der Schwefelverbindung, um ein vollständiges Quenchen des Übergangmetallkomplexes zu erreichen. Beispiele für solche Liganden sind das weiter unten beschriebenen N,N,N',N",N"-Pentamethyldiethylentriamin (PMDETA) und Tris(2-aminoethyl)amin (TREN). Im Falle von Liganden, die in der Komplexverbindung in einem biäquivalenten Verhältnis zum Übergangsmetall vorliegen, ist diese Erfindung nur anwendbar, wenn das Übergangsmetall in einem deutlichen Unterschuss von z.B. 1:2 gegenüber den aktiven Gruppen X eingesetzt wird. Beispiel für einen solchen Liganden ist 2,2'-Bipyridin.

Bestandteil dieser Erfindung ist darüber hinaus, dass die verwendeten Schwefelverbindungen nahezu vollständig an die Polymerketten gebunden werden, und dass man mittels einfacher Modifikationen in der Filtration die Restschwefelanteile ganz einfach vollständig entfernen kann. Auf diese Weise erhält man Produkte, die keinen unangenehmen, durch die Schwefelverbindungen bedingten Geruch aufweisen.

Ein großer Vorzug der vorliegenden Erfindung ist die effiziente Entfernung der Übergangsmetallkomplexe aus der Lösung. Durch Anwendung des erfindungsgemäßen Verfahrens ist es möglich, den Übergangsmetallgehalt mit einer Filtration um mindestens 80 %, bevorzugt um mindestens 95 % und ganz besonders bevorzugt um mindestens 99 % zu reduzieren. In besonderen Ausführungen ist es sogar durch Anwendung des erfindungsgemäßen Verfahrens möglich, den Übergangsmetallgehalt um mehr als 99,9 % zu reduzieren.

Bevorzugt handelt es sich bei den erfindungsgemäß nach oder während des Polymerisationsabbruchs der Polymerlösung zugegebenen Reagenzien um Verbindungen, die Schwefel in organisch gebundener Form enthalten. Insbesondere bevorzugt weisen diese zur Fällung von Übergangsmetallionen bzw. Übergangsmetallkomplexen eingesetzten schwefelhaltigen Verbindungen SH-Gruppen und gleichzeitig Silylgruppen auf. Als organische Verbindungen seien ganz besonders bevorzugt silylfunktionalisierte Mercaptane und / oder andere funktionalisierte oder auch unfunktionalisierte Verbindungen, die eine oder mehrere Thiolgruppen und gleichzeitig Silylgruppen aufweisen, aufgeführt.

Bei diesen erfindungsgemäßen silylfunktionalisierte Mercaptane oder kurz Mercaptosilanen handelt es sich im Allgemeinen um Verbindungen der Form HS-R¹-((SiR²ₒ(OR³)ₚ)_{y}(SiR²ₙ(OR³)ₘ)_{z})ₓ.

Dabei steht R¹ für einen Alkylrest mit einem bis 20 Kohlenstoffatomen, der linear, cylclisch oder verzweigt sein kann.

Bevorzugt sind lineare Alkylreste R¹ mit einem bis 10 Kohlenstoffatomen.

Insbesondere bevorzugt sind Verbindungen, bei denen es sich bei R¹ um einen zweibindigen -CH₂-, -CH₂CH₂- oder einen -(CH₂)₃- Rest handelt.

Bei x handelt es sich um eine Zahl zwischen 1 und 10 und damit um die Zahl der Silylgruppen, die an den Alkylrest R¹ gebunden sind. Bevorzugt sind Alkylreste mit x ≤ 3 und damit höchstens drei Silylgruppen Besonders bevorzugt sind monofuntkionelle Alkylreste mit x = 1.

R² und R³ stehen jeweils für Alkylreste mit einem bis 20 Kohlenstoffatomen, die linear, cyclisch oder verzweigt sein können. Bevorzugt stehen R² und R³ jeweils für Alkylreste mit einem bis 20 Kohlenstoffatomen.

Dabei können R² und R³ zueinander identisch oder verschieden sein. Auch können sowohl R² als auch R³ für identische oder jeweils für verschiedene Gruppen in dem Mercaptosilan stehen. Im Einzelnen können R² und R³ beispielsweise folgende Bedeutungen haben: Methyl-, Ethyl-, Propyl-, iso-Propyl, n-Butyl-, Isobutyl-, tert.-Butyl-, Pentyl-, Cyclopentyl-, Hexyl-, Cyclohexyl-, Heptyl-, Octyl-, Isooctyl-, Ethylhexyl-, Nonyl-, Decyl-, Eicosyl-, Isobornyl-, Lauryl- oder Stearyl-, ferner Cyclopentyl-, Cyclohexyl- oder durch ein oder mehrere Alkylgruppen substituierte Cycloalkane, wie beispielsweise Methylcyclohexyl- oder Ethylcyclohexyl-.

In einer anderen Ausführungsform kann es sich bei R² und/oder R³ auch um Kohlenwasserstoffgruppen mit etherischem Sauerstoff bzw. kurze Polyethersequenzen handeln. Solche Verbindungen sind beispielsweise in DE 10 2005 057 801 beschrieben.

In einer bevorzugten Ausführungsform handelt es sich bei R³ um lineare Alkylreste. In einer besonders bevorzugten Ausführungsform handelt es sich bei R³ um Methyl- und/oder Ethylgruppen.

Mit o und p sind jeweils Zahlen zwischen 0 und 2 gemeint, die im Falle einer zweibindigen Silylgruppe in Summe 2 ergeben, im Falle einer dreibindigen in Summe 1 und im Falle einer vierbindigen Silylgruppe in Summe 0 ergeben, y ist eine beliebige Zahl zwischen 0 und 20. Bevorzugt ist eine Ausführungsform mit y gleich einer beliebigen zahl zwischen 1 und 3 - besonders bevorzugt ist y = 0. z ist abhängig von der Anzahl drei- bzw. vierbindiger d.h. verzeigender Silylgruppen zwischen R¹ den Endgruppen und ist mindestens gleich 1. Bevorzugt ist eine Ausführung mit z = 1.

Mit m und n sind jeweils Zahlen zwischen 0 und 3 gemeint, die in Summe 3 ergeben. Dabei sind insbesondere Verbindungen mit m ≥ 2 bevorzugt.

Bei den insbesondere bevorzugten Verbindungen handelt es sich um kommerziell leicht verfügbare Verbindungen, die z.B. als Haftvermittler große industrielle Bedeutung haben. Vorteil dieser Verbindungen ist ihre leichte Verfügbarkeit und ihr niedriger Preis. Ein Beispiel einer solchen Verbindung stellt 3-Mercaptopropyltrimethoxysilan, das von der Degussa AG unter dem Namen DYNALYSAN^{®}-MTMO vertrieben wird, dar. Weitere verfügbare Silane sind 3-Mercaptopropyltriethoxysilan oder 3-Mercaptopropylmethyldimethoxysilan (Fa. ABCR). Besonders reaktiv sind die so genannten α-Silane. In diesen Verbindungen sind die Mercaptogruppe und die Silangruppe an das gleiche Kohlenstoffatom gebunden (R¹ ist also in der Regel -CH₂-). Entsprechende Silangruppen solcher Art sind besonders reaktiv und können somit in der späteren Formulierung zu einem breiteren Anwendungsspektrum führen. Beispiel für eine solche Verbindung wäre Mercaptomethylmethyldiethoxysilan (Fa. ABCR).

Die vorliegende Erfindung lässt sich jedoch nicht auf diese Verbindungen einschränken. Entscheidend ist vielmehr, dass das eingesetzte Fällungsmittel einerseits eine -SH-Gruppe aufweist bzw. eine -SH-Gruppe unter den vorliegenden Bedingungen der Polymerlösung in situ ausbildet. Andererseits muss die besagte Verbindung eine Silylgruppe aufweisen.

In der freiradikalischen Polymerisation wird die Menge an Reglern, bezogen auf die zu polymerisierenden Monomeren, zumeist mit 0,05 Gew.-% bis 5 Gew.-%, angegeben. In der vorliegenden Erfindung wird die Menge der eingesetzten Schwefelverbindung nicht auf die Monomere, sondern auf die Konzentration der polymerisationsaktiven Kettenenden in der Polymerlösung bezogen. Mit polymerisationsaktiven Kettenenden ist die Summe aus schlafenden und aktiven Kettenenden gemeint. Die erfindungsgemäßen schwefelhaltigen Fällungsmittel werden in diesem Sinne in 1,5 molaren Äquivalenten, bevorzugt 1,2 molaren Äquivalenten, besonders bevorzugt unter 1,1 molaren Äquivalenten und ganz besonders bevorzugt unter 1,05 molaren Äquivalenten eingesetzt. Die verbleibenden Restschwefelmengen lassen sich durch Modifikation des folgenden Filtrationsschrittes leicht entfernen.

Es ist dem Fachmann leicht ersichtlich, dass die beschriebenen Mercaptane bei einer Zugabe zur Polymerlösung während oder nach Abbruch der Polymerisation mit Ausnahme der beschriebenen Substitutionsreaktion keinen weiteren Einfluss auf die Polymere haben können. Dies gilt insbesondere für die Breite der Molekulargewichtsverteilungen, das Molekulargewicht, zusätzliche Funktionalitäten, Glastemperatur, bzw. Schmelztemperatur bei teilkristallinen Polymeren und Polymerarchitekturen.

Weiterhin ist dem Fachmann leicht ersichtlich, dass ein entsprechendes Verfahren, welches apparativ ausschließlich auf einer Filtration der Polymerlösung beruht, leicht in einen großtechnischen Prozess ohne größere Umbauten an bestehenden Lösungspolymerisationsanlagen implementierbar ist.

Ein weiterer Vorteil der vorliegenden Erfindung liegt darin, dass durch die Reduzierung auf einen oder maximal zwei Filtrationsschritte eine im Vergleich zu vielen etablierten Systemen sehr schnelle Aufarbeitung der Polymerlösung erfolgen kann.

Zudem erfolgen die Substitution, die Fällung sowie die anschließende Filtration bei einer Temperatur im Bereich zwischen 0°C und 120°C, Verfahrensparameter in einem gängigen Bereich.

Zur Reduzierung der letzten Spuren Schwefelverbindungen können Adsorptionsmittel oder Adsorptionsmittelmischungen eingesetzt werden. Dies kann parallel oder in aufeinanderfolgenden Aufarbeitungsschritten erfolgen. Die Adsorptionsmittel sind aus dem Stand der Technik bekannt, vorzugsweise ausgewählt aus der Gruppe Silica und/oder Aluminiumoxid, organische Polysäuren sowie Aktivkohle (z.B. Norit SX plus der Fa. Norit).

Auch die Entfernung der Aktivkohle kann in einem gesonderten oder in einem zur Übergangsmetallentfernung simultanen Filtrationsschritt erfolgen. In einer besonders effizienten Variante wird die Aktivkohle nicht als Feststoff zur Polymerlösung gegeben, sondern die Filtration erfolgt durch mit Aktivkohle beladene Filter, die kommerziell verfügbar sind (z.B. AKS 5 der Fa. Pall Seitz Schenk). Auch zur Anwendung kommen kann eine Kombination aus der Zugabe von den zuvor beschriebenen sauren Hilfsstoffen und Aktivkohle bzw. der Zuschlag der zuvor beschrieben Hilfsstoffe und die Filtration über mit Aktivkohle beladene Filter.

Die vorliegende Erfindung bezieht sich auf eine Endgruppenfunktionalisierung von Polymeren mit Silylgruppen, die Entfernung der endständigen Halogenatome und der Übergangsmetallkomplexe aus sämtlichen mittels ATRP-Verfahren hergestellten Polymerlösungen. Im Folgenden werden die Möglichkeiten die sich aus der ATRP ergeben kurz umrissen. Diese Aufzählungen sind jedoch nicht dazu geeignet die ATRP und damit die vorliegende Erfindung eingrenzend zu beschreiben. Sie dienen vielmehr dazu, die große Bedeutung und die vielseitige Einsatzmöglichkeit der ATRP und damit auch der vorliegenden Erfindung zur Aufarbeitung entsprechender ATRP-Produkte aufzuzeigen.

Die mittels ATRP polymerisierbaren Monomere sind hinlänglich bekannt. Im Folgenden werden ein paar Beispiele aufgelistet. Dabei beschreibt die Schreibweise (Meth)acrylat die Ester der (Meth)acrylsäure und bedeutet hier sowohl Methacrylat, wie z.B. Methylmethacrylat, Ethy)methacrylat, als auch Acrylat, wie z.B. Methylacrylat, Ethylacrylat, sowie Mischungen aus beiden.

Monomere die polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)-acrylat, Lauryl(meth)acrylat, Aryl-(meth)acrylate wie zum Beispiel Benzyl(meth)acrylat oder Phenyl(meth)acrylat Mono(meth)acrylate von Ethern, Polyethylenglycolen, Polypropylenglycolen oder deren Mischungen mit 5-80 C-Atomen. Die Monomerauswahl kann auch jeweilige hydroxyfunktionalisierte und/oder aminofunktionalisierte und/oder mercaptofunktionalisierte und/oder eine olefinisch funktionalisierte Acrylate bzw. Methacrylate wie zum Beispiel Allylmethacrylat oder Hydroxyethylmethacrylat umfassen.

Neben den zuvor dargelegten (Meth)acrylaten können die zu polymerisierenden Zusammensetzungen auch aus anderen ungesättigten Monomere bestehen bzw. diese enthalten. Hierzu gehören unter anderem 1-Alkene, wie 1-hexen, 1-Hepten, Acrylnitril, Vinylester wie z.B. Vinylacetat, insbesondere Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, sowie die jeweiligen hydroxyfunktionalisierten und/oder aminofunktionalisierten und/oder mercaptofunktionalisierten und/oder eine olefinisch funktionalisierten Verbindungen.

Das Verfahren kann in beliebigen halogenfreien Lösungsmitteln durchgeführt werden. Bevorzugt werden Toluol, Xylol, Acetate, vorzugsweise Butylacetat, Ethylacetat, Propylacetat; Ketone, vorzugsweise Ethylmethylketon, Aceton; Ether; Aliphate, vorzugsweise Pentan, Hexan; Alkohole, vorzugsweise Cyclohexanol, Butanol, Hexanol aber auch Biodiesel.

Blockcopolymere der Zusammensetzung AB können mittels sequentieller Polymerisation dargestellt werden. Blockcopolymere der Zusammensetzung ABA oder ABCBA werden mittels sequentieller Polymerisation und Initiierung mit bifunktionellen Initiatoren dargestellt.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weisen die erfindungsgemäß gewonnen Polymere ein zahlenmittleres Molekulargewicht zwischen 5000 g/mol und 120.000 g/mol und besonders bevorzugt zwischen 7.500 g/mol und 50.000 g/mol auf.

Es wurde gefunden, dass die Molekulargewichtsverteilung unter 1,8, bevorzugt unter 1,6, besonders bevorzugt unter 1,4 und idealerweise unter 1,2 liegt.

Die Molekulargewichtsverteilungen werden mittels Gelpermeationschromatographie (kurz GPC) bestimmt.

Als Initiator kann jede Verbindung eingesetzt werden, die eine oder mehrere Atome bzw. Atomgruppen X aufweist, welche unter den Polymerisationsbedingungen des ATRP-Verfahrens radikalisch übertragbar sind. Bei der aktiven Gruppe X handelt es sich in der Regel um Cl, Br, I, SCN und/oder N₃. Geeignete Initiatoren umfassen verallgemeinert folgende Formeln:

R¹R²R³C-X,

R¹C(=O)-X,

R¹R²R³Si-X,

R¹NX₂,

R¹R²N-X, (R¹)ₙP(O)ₘ-X₃₋ₙ,

(R¹O)ₙP(O)ₘ-X₃₋ₙ

und

(R¹)(R²O)P(O)ₘ-X,

wobei X ausgewählt ist aus der Gruppe bestehend aus Cl, Br, I, OR⁴, SR⁴, SeR⁴, OC(=O)R⁴, OP(=O)R⁴, OP(=O)(OR⁴)₂, OP(=O)OR⁴, O-N(R⁴)₂, CN, NC, SCN, NCS, OCN, CNO und N₃ darstellen (wobei R⁴ eine Alkylgruppe von 1 bis 20 Kohlenstoffatomen, wobei jedes Wasserstoffatom unabhängig durch ein Halogenatom, vorzugsweise Fluorid oder Chlorid ersetzt sein kann oder Alkenyl von 2 bis 20 Kohlenstoffatomen, vorzugsweise Vinyl, Alkenyl von 2 bis 10 Kohlenstoffatomen, vorzugsweise Acetylenyl, Phenyl, welches mit 1 bis 5 Halogenatomen oder Alkylgruppen mit 1 bis 4 Kohlenstoffatomen substituiert sein kann, oder Aralkyl bedeutet und wobei R¹, R² und R³ unabhängig voneinander ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, Silylgruppen, Alkylsilylgruppen, Alkoxysilylgruppen, Amingruppen, Amidgruppen, COCl, OH, CN, Alkenyl- oder Alkinylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkenyl- oder Alkenylgruppen mit 2 bis 6 Kohlenstoffatomen, welche mit Oxiranyl oder Glycidyl, Aryl, Heterocyclyl, Aralkyl, Aralkenyl (arylsubstituiertes Alkenyl, wobei Aryl wie zuvor definiert ist und Alkenyl Vinyl ist, welches mit ein oder zwei C₁ bis C₆ Alkylgruppen, in welchen ein bis alles der Wasserstoffatome, vorzugsweise eines durch Halogen substituiert sind (vorzugsweise Fluor oder Chlor, wenn ein oder mehr Wasserstoffatome ersetzt sind, und vorzugsweise Fluor, Brom oder Brom, falls ein Wasserstoffatom ersetzt ist) Alkenylgruppen mit 1 bis 6 Kohlenstoffatomen, die mit 1 bis 3 Substituenten (vorzugsweise 1) ausgewählt aus der Gruppe bestehend aus C₁ bis C₄ Alkoxy, Aryl, Heterocyclyl, Ketyl, Acetyl, Amin, Amid, Oxiranyl und Glycidyl substituiert sind und m=0 oder 1; m=0, 1 oder 2 darstellt.

Vorzugsweise sind nicht mehr als zwei der Reste R¹, R² und R³ Wasserstoff, besonders bevorzugt ist maximal einer der Reste R¹, R² und R³ Wasserstoff.

Zu den besonders bevorzugten Initiatoren gehören Benzylhalogenide, wie p-Chlormethylstyrol, Hexakis(α-brommethyl)benzol, Benzylchlorid, Benzylbromid, 1-Bromi-phenylethan und 1-Chlor-i-phenylethan. Weiterhin besonders bevorzugt sind Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat oder Ethyl-2-bromisobutyrat. Bevorzugt sind auch Tosylhalogenide, wie p-Toluolsulfonylchlorid; Alkylhalogenide, wie Tetrachlormethan, Tribromethan, 1-Vinylethylchlorid oder 1-Vinylethylbromid; und Halogenderivate von Phosphorsäureestern, wie Dimethylphosphonsäurechlorid.

Eine besondere, zur Synthese von Blockcopolymeren geeignete Gruppe der Initiatoren stellen die Makroinitiatoren dar. Diese zeichnen sich dadurch aus, dass es sich bei 1 bis 3, bevorzugt 1 bis 2 und ganz besonders bevorzugt bei einem Rest aus der Gruppe R¹, R² und R³ um makromolekulare Reste handelt. Diese Makroreste können ausgewählt sein aus der Gruppe der Polyolefine, wie Polyethylen oder Polypropylen; Polysiloxane; Polyether, wie Polyethylenoxid oder Polypropylenoxid; Polyester, wie Polymilchsäure oder anderen bekannten, endgruppenfunktionalisierbaren Makromoleküle. Dabei können die makromolekularen Reste jeweils ein Molekulargewicht zwischen 500 und 100.000, bevorzugt zwischen 1.000 und 50.000 und besonders bevorzugt zwischen 1.500 und 20.000 aufweisen. Auch möglich ist es, besagte Makromoleküle zur Initiierung der ATRP einzusetzen, die an beiden Enden als Initiator geeignete Gruppen aufweisen, zum Beispiel in Form eines Bromtelechelen. Mit Makroinitiatoren dieser Art ist es möglich ABA-Triblockcopolymere aufzubauen.

Eine weitere wichtige Gruppe der Initiatoren stellen die bi- oder multifunktionellen Initiatoren dar. Mit multifunktionellen Initiatormolekülen ist es zum Beispiel möglich,

Sternpolymere zu synthetisieren. Mit bifunktionellen sind Tri- bzw.

Pentablockcopolymere und telechele Polymere darstellbar. Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO₂R, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ₋OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX₂-(CH₂)ₙ-CX₂-C₆H₅, C₆H₅-CX₂-(CH₂)ₙ-CX₂-C₆H₅, o,- m- bzw. p-XCH₂-Ph-CH₂X, o,- m- bzw. p-CH₃CHX-Ph-CHXCH₃, o,- m- bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m-bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder Iod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) eingesetzt werden. Vorzugsweise werden 1,4-Butandiol-di-(2-bromo-2-methylpropionat), 1,2-Ethylenglycol-di-(2-bromo-2-methylpropionat), 2,5-Dibromadipinsäure-di-ethylester oder 2,3-Dibrom-maleinsäure-di-ethylester verwendet. Aus dem Verhältnis Initiator zu Monomer ergibt sich das spätere Molekulargewicht, falls das gesamte Monomer umgesetzt wird.

Katalysatoren für ATPR sind in Chem.Rev. 2001, 101, 2921 aufgeführt. Es werden überwiegend Kupferkomplexe beschrieben - unter anderem kommen aber auch Eisen-, Kobalt-, Chrom-, Mangan-, Molybdän-, Silber-, Zink-, Palladium-, Rhodium-, Platin-, Ruthenium-, Iridium-, Ytterbium-, Samarium-, Rhenium- und/oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, Cul, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu monofunktionellem Initiator liegt im Allgemeinen im Bereich von 0,01:1 bis 10:1, vorzugsweise im Bereich von 0,1:1 bis 3:1 und besonders bevorzugt im Bereich von 0,5:1 bis 2:1, ohne dass hierdurch eine Beschränkung erfolgen soll.

Das molare Verhältnis Übergangsmetall zu bifunktionellem Initiator liegt im Allgemeinen im Bereich von 0,02:1 bis 20:1, vorzugsweise im Bereich von 0,2:1 bis 6:1 und besonders bevorzugt im Bereich von 1:1 bis 4:1, ohne dass hierdurch eine Beschränkung erfolgen soll.

Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinätionsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll.

Entscheidend für die vorliegende Erfindung ist, dass die Liganden protonierbar sind.

Bevorzugt sind Liganden, die in der Koordinationsverbindung in einem Verhältnis von 1:1 zum Übergangsmetall vorliegen. Bei Verwendung von Liganden wie 2,2'-Bipyridin, die in einem Verhältnis zum Übergangsmetall von 2:1 im Komplex gebunden sind, kann eine vollständige Protonierung nur erfolgen, wenn das Übergangsmetall in einem deutlichen Unterschuss von z.B. 1:2 zum aktiven Kettenende X eingesetzt wird. Eine solche Polymerisation wäre jedoch gegenüber einer mit äquivalenten Komplex-X-Verhältnissen stark verlangsamt.

Für die erfindungsgemäßen silylfunktionalisierten Produkte ergibt sich ein breites Anwendungsfeld. Die Auswahl der Anwendungsbeispiele ist nicht dazu geeignet die Verwendung der erfindungsgemäßen Polymere einzuschränken. Die Beispiele sollen einzig dazu dienen, stichprobenartig die breite Einsatzmöglichkeit der beschriebenen Polymere darzustellen. Beispielsweise werden mittels ATRP synthetisierte Polymere als Bindemittel in Formulierungen für Hotmelts, Klebstoffe, elastische Klebstoffe, Dichtmassen, Heißsiegelmassen, harte oder weiche Schäume, Farben bzw. Lacken, Abformmassen, Vergussmassen, Bodenbeläge oder in Verpackungen. Auch können Sie Anwendung als Dispergiermittel, als Polymeradditiv oder als Präpolymere für polymeranaloge Reaktionen bzw. zum Aufbau von Blockcopolymeren finden. Bevorzugt lassen sich mit den neuen Bindemitteln Kleb- und Dichtstoffe herstellen.

Diese neuen Bindemitteln können sowohl in einkomponentigen wie auch zweikomponentigen Formulierungen eingesetzt werden. In Zweikomponentensystemen ist zum Beispiel eine Coformulierung mit silylierten Polyurethanen denkbar.

Weitere übliche Bestandteile solcher Formulierungen sind neben den Bindemitteln Lösungsmittel, Füllstoffe, Pigmente, Weichmacher, Stabilisierungsadditive, Wasserfänger, Haftvermittler, Thixotropiermittel, Vernetzungskatalysatoren, Tackifier und weitere, dem Fachmann bekannte Bestandteile.

Die im Folgenden gegebenen Beispiele werden zur besseren Veranschaulichung der vorliegenden Erfindung gegeben.

### Beispiele

Die vorliegenden Beispiele wurden auf den ATRP-Prozess bezogen. Dabei wurden die Polymerisationsparameter dergestalt ausgewählt, dass mit besonders hohen Kupferkonzentrationen gearbeitet werden musste: niedriges Molekulargewicht, 50%ige Lösung und bifunktioneller Initiator.

### Beispiel 1

In einem mit Rührer, Thermometer, Rückflusskühler, Stickstoffeinleitungsrohr und Tropftrichter ausgestatteten Doppelmantelgefäß wurden unter N₂-Atmosphäre 10 g Methylmethacrylat, 15,8 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,47 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden 0,25 g 3-Mercaptopropyltrimethoxysilan zugegeben. Die zuvor grünliche Lösung färbt sich spontan rötlich und ein roter Niederschlag fällt aus. Die Filtration erfolgt mittels einer Überdruckfiltration. Das mittlere Molekulargewicht und die Molekulargewichtsverteilung werden anschließend durch GPC-Messungen bestimmt. Von einer getrockneten Probe des Filtrats wird anschließend mittels AAS der Kupfergehalt bestimmt.

Die verbleibende Lösung wird mit 8 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Zuvor konnte die Bildung eines farblosen Niederschlags beobachtet werden. Zur weiteren Analyse wird eine Probe dieses Feststoffs isoliert. Auch von dem zweiten Filtrat wird mittels AAS der Kupfergehalt einer getrockneten Probe bestimmt und eine GPC-Messung vorgenommen.

### Beispiel 2

In einem mit Rührer, Thermometer, Rückflusskühler, Stickstoffeinleitungsrohr und Tropftrichter ausgestatteten Doppelmantelgefäß wurden unter N₂-Atmosphäre 7,5 g Methylmethacrylat, 15,8 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,47 g 1,4-Butandiol-di-(2-bromo-2-methylpropionat) zugegeben. Es wird für eine Polymerisationszeit von 2,5 Stunden bei 70 °C gerührt und anschließend eine Probe zur GPC Messung entnommen. Darauf werden 2,5g n-Butylacrylat zugegeben und weitere 90 min bei 70 °C gerührt. Nach ca. 5 min Einleiten von Luftsauerstoff zum Abbruch der Reaktion werden 0,25 g 3-Mercaptopropyltrimethoxysilan zugegeben. Die zuvor grünliche Lösung färbt sich spontan rötlich und ein roter Niederschlag fällt aus. Die Filtration erfolgt mittels einer Überdruckfiltration. Das mittlere Molekulargewicht und die Molekulargewichtsverteilung werden anschließend durch GPC-Messungen bestimmt. Von einer getrockneten Probe des Filtrats wird anschließend mittels AAS der Kupfergehalt bestimmt.

Die verbleibende Lösung wird mit 8 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Zuvor konnte die Bildung eines farblosen Niederschlags beobachtet werden. Zur weiteren Analyse wird eine Probe dieses Feststoffs isoliert. Auch von dem zweiten Filtrat wird mittels AAS der Kupfergehalt einer getrockneten Probe bestimmt und eine GPC-Messung vorgenommen.

### Vergleichsbeispiel 1

In einem mit Rührer, Thermometer, Rückflusskühler, Stickstoffeinleitungsrohr und Tropftrichter ausgestatteten Doppelmantelgefäß wurden unter N₂-Atmosphäre 10 g Methylmethacrylat, 15,8 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,47 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden der Lösung 8 g Tonsil Optimum 210 FF (Fa. Südchemie) und 4 Gew% Wasser zugesetzt und 60 min gerührt. Die Filtration erfolgt mittels einer Überdruckfiltration über einen Aktivkohlefilter (AKS 5 der Fa. Pall Seitz Schenk). Das mittlere Molekulargewicht und die Molekulargewichtsverteilung werden anschließend durch GPC-Messungen bestimmt. Von einer getrockneten Probe des Filtrats wird anschließend mittels AAS der Kupfergehalt bestimmt.

**Tabelle 1**

| Beispiel | Beispiel 1 | Beispiel 2 | Vergleich 1 |
|---|---|---|---|
| Monomer | MMA | MMA / n-BA | MMA |
| Cu-Konzentration (Polymerisation) | ca. 5,5 mg/g | | |
| Schwefelverbindung | 3-Mercapto-propyltrimethoxysilan | | - |
| Adsorptionsmittel | - | - | Alox/Silica |
| Cu-Konzentration (2. Filtration) | 0,2 µg/g | 0,3 µg/g | 20 µg/g |
| Äquivalente zu Cu | 1,27 | 1,27 | - |
| Mₙ (erste Stufe) | - | 6900 | - |
| M_{w}/Mₙ (erste Stufe) | - | 1,19 | - |
| Mₙ (vor Reinigung) | 8200 | 8500 | 8800 |
| M_{w}/Mₙ (vor Reinigung) | 1,21 | 1,17 | 1,20 |
| Mₙ (nach Reinigung) | 8200 | 8600 | 8900 |
| M_{w}/Mₙ (nach Reinigung) | 1,31 (Dimerisierung) | 1,18 | 1,21 |

| | | | |
|---|---|---|---|
| MMA= Methylmethacrylat; Alox= Aluminiumoxid | | | |

Aus den Beispielen ist klar ersichtlich, dass die bereits sehr guten Ergebnisse mit Adsorptionsmitteln zur Entfernung von Übergangsmetallkomplexen (in diesem Fall Kupferkomplexen) aus Polymerlösungen durch die vorhergehende Fällung mit Schwefelverbindungen klar verbessert werden können.

Der Nachweis der Endgruppensubstitution erfolgt gleich mehrfach durch Charakteriseirung verschiedener Bestandteile der aufgearbeiteten Polymerlösung:
1.) der Kupferniederschlag: der rote Niederschlag, der sich bei Zugabe der Schwefelreagenzien bildet, zeigt mit < 10 ppm einen äußerst geringen Schwefelanteil, so dass eine Fällung des Metalls als Sulfid ausgeschlossen werden kann.
2.) Das Polymer: Die Elementaranalyse der Polymerlösung zeigt auch nach Entfernen des zweiten, farblosen Niederschlags einen sehr hohen Schwefelgehalt. Nahezu der gesamte dem System zugesetzte Schwefel findet sich in der Lösung bzw. im getrockneten Produkt wieder. Dies entspricht 65% des eingesetzten bzw. ca. 90% des Schwefelgehalts, der bei einer theoretischen vollständigen Endgruppen Substitution unter vollständiger Vermeidung vorhergehender Abbruchreaktionen zu erwarten wäre.
3.) Der zweite, farblose Niederschlag: Sowohl ¹H-NMR-Untersuchungen als auch IR-Spektroskopie zeigten, dass es sich bei dem Niederschlag um das Ammoniumsalz des einfach protonierten Triamins PMDETA handelt. Eine Elementaranalyse zeigte, dass dieser Niederschlag schwefelfrei ist. Mittels Ionenchromatographie konnte je nach Probe ein Bromidgehalt zwischen 32 Gew% und 37 Gew% nachgewiesen werden. Dieser Wert entspricht dem Gehalt in einem reinen PMDETA-Ammoniumbromid.
4.) In der NMR Untersuchung konnte eine Verschiebung der in α-Stellung zur ursprünglichen Thiolgruppe vorliegenden Methylenprotonen detektiert werden. Dies ist ein klares Indiz auf die Ausbildung einer Thioethergruppe.

Aus den Ergebnissen zu Beispiel 1 erkennt man, dass entsprechende Schwefelverbindungen bezogen auf die Übergangsmetallverbindung bereits in kleinstem Überschuss eingesetzt zu einer sehr effizienten Fällung und einem hohen

Funktionalisierungsgrad führen. Man erkennt aus den Beispielen auch, dass mit Thiol funktionalisierten Reagenzien eine effizientere Entfernung der
Übergangsmetallverbindungen aus der Lösung realisierbar ist, als dies durch eine bereits optimierte Aufarbeitung mit Adsorptionsmitteln möglich ist.

Aus dem Vergleich der Molekulargewichte und Molekulargewichtsverteilungen vor und nach der Aufarbeitung erkennt man, dass die angewendeten Methoden mit Ausnahme der Substitution der Endgruppen keinen Einfluss auf die Polymercharakteristika haben. In Beispiel 2 konnte in der GPC Messung ein zusätzliches höhermolekulares Signal festgestellt werden. Dieses ist auf eine Dimerisierung von Ketten unter Ausbildung von Si-O-Si Bindungen zurückzuführen und stellt ein weiteres Indiz für die erfolgreiche Substitution dar. Unter trockenen Lagerungsbedingungen ist eine solche Dimerisierung vermeidbar.

## Patentansprüche

1. Verfahren zur Herstellung von Polymeren mit Silylendgruppen,
**dadurch gekennzeichnet, dass**
Halogenatome an Polymerkettenenden mittels Zusatz einer geeigneten silylfunktionalisierten Schwefelverbindung substituiert werden, und dass die Polymere durch Polymerisation von Styrolen, Alkylacrylaten und/oder Alkylmethacrylaten und/oder Mischungen, die überwiegen aus Styrolen, Alkylacrylaten und/oder Alkylmethacrylaten bestehen, erhältlich sind.

2. Verfahren zur Herstellung von Polymeren mit Silylendgruppen gemäß Anspruch 1,
**dadurch gekennzeichnet, dass**
zur Abtrennung von Übergangsmetallverbindungen aus Polymerlösungen die Übergangsmetallverbindung mittels Zusatz einer Schwefelverbindung gefällt und anschließend mittels Filtration abgetrennt wird.

3. Verfahren zur Herstellung von Polymeren mit Silylendgruppen gemäß Anspruch 1,
**dadurch gekennzeichnet, dass**
zur gleichzeitigen Entfernung von Halogenatomen aus Polymeren die Halogenatome zu über 90% durch den Zusatz der Schwefelverbindung substituiert werden.

4. Verfahren zur Herstellung von Polymeren mit Silylendgruppen,
**dadurch gekennzeichnet, dass**
es sich bei besagten Schwefelverbindungen aus den Ansprüchen 1 bis 3 um dieselbe Schwefelverbindung handelt und dass alle drei Verfahrensschritte simultan ablaufen.

5. Verfahren zur Herstellung von Polymeren mit Silylendgruppen gemäß Anspruch 4,
**dadurch gekennzeichnet, dass**
es sich bei der Schwefelverbindung um ein Mercaptan oder eine andere organische Verbindung mit einer Thiolgruppe handelt, dass besagte Schwefelverbindung eine zusätzliche Funktionalität aufweist, und dass es sich bei der weiteren Funktionalität um eine Silylgruppe handelt.

6. Verfahren zur Herstellung von Polymeren mit Silylendgruppen gemäß Anspruch 5,
**dadurch gekennzeichnet, dass**
es sich bei den Schwefelverbindungen um silylfunktionalisierte Mercaptane der Formel handelt
HS-R¹-((SiR²ₒ(OR³)ₚ)_{y}(SiR²ₙ(OR³)ₘ)_{z})ₓ,
wobei gilt:
R¹ steht für einen Alkylrest mit einem bis 20 Kohlenstoffatomen,
bei x handelt es sich um eine Zahl zwischen 1 und 10,
R² und R³ stehen jeweils für Alkylreste mit einem bis 20 Kohlenstoffatomen,
mit o und p sind jeweils Zahlen zwischen 0 und 2 gemeint, die im Falle einer zweibindigen Silylgruppe in Summe 2 ergeben, im Falle einer dreibindigen in Summe 1 und im Falle einer vierbindigen Silylgruppe ein Summe 0 ergeben,
y ist eine beliebige Zahl zwischen 0 und 20,
z ist abhängig von der Anzahl drei- bzw. vierbindiger, d.h. verzweigender Silylgruppen, zwischen R¹ und den Endgruppen und ist mindestens gleich 1 und mit m und n sind jeweils Zahlen zwischen 0 und 3 gemeint, die in Summe 3 ergeben.

7. Verfahren zur Herstellung von Polymeren mit Silylendgruppen gemäß Anspruch 6,
**dadurch gekennzeichnet, dass**
es sich bei den Schwefelverbindungen zum silylfunktionalisierte Mercaptane der Formel handelt
HS-R¹-(SiR²ₙ(OR³)ₘ),
wobei gilt:
R¹ steht für -CH₂-, -CH₂CH₂- oder -(CH₂)₃-,
Bei x handelt es sich um 1,
R² und R³ stehen jeweils für Methyl- und/oder Ethylgruppen,
und mit m und n sind jeweils Zahlen zwischen 0 und 3 gemeint,
dabei ist m gleich 2 oder 3.

8. Verfahren zur Herstellung von Polymeren mit Silylendgruppen gemäß Anspruch 7,
**dadurch gekennzeichnet, dass**
es sich bei der Schwefelverbindung um Mercaptomethylmethyldiethoxysilan, 3-Mercaptopropyltrimethoxysilan, 3-Mercaptopropyltriethoxysilan oder 3-Mercaptopropylmethyldimethoxysilan handelt.

9. Verfahren zur Herstellung von Polymeren mit Silylendgruppen gemäß Anspruch 1,
**dadurch gekennzeichnet, dass**
die Schwefelverbindung nach oder während des Abbruchs einer Polymerisation zugegeben wird, und dass es sich um eine Polymerisation nach dem ATRP-Verfahren handelt.

10. Verfahren gemäß Anspruch 9,
**dadurch gekennzeichnet, dass**
es sich bei der als Katalysator in der Polymerisation eingesetzten Übergangsmetallverbindung um eine Kupferverbindung handelt.

11. Verfahren gemäß Anspruch 10,
**dadurch gekennzeichnet, dass**
man in der vorangehenden Polymerisation einen Initiator einsetzt, der eine aktive Gruppe X aufweist, dass es sich bei der aktiven Gruppe X um Cl, Br, I, SCN und/oder N₃ handelt, und dass der Initiator bezüglich der aktiven Gruppen ein-, zwei- oder mehrwertig sein kann.

12. Verfahren gemäß Anspruch 11,
**dadurch gekennzeichnet, dass**
die aktive Gruppe X an den Kettenenden der Polymere durch die Schwefelverbindung gemäß den Ansprüchen 1-13 zu einem Thioether unter Freisetzung einer Säure der Form X-H substituiert werden.

13. Verfahren gemäß Anspruch 9,
**dadurch gekennzeichnet, dass**
der Katalysator vor der Polymerisation mit einem N-haltige Chelatliganden, der eine oder mehrere koordinative Bindungen mit dem Übergangsmetall zu einem Metall-Ligand-Komplex eingehen kann, zusammengebracht wird, dass der Ligand von der Säure X-H protoniert wird, und dass der Ligand durch die Protonierung von dem koordinierten Übergangsmetall gelöst wird.

14. Verfahren gemäß Anspruch 13,
**dadurch gekennzeichnet, dass**
das Übergangsmetall durch die Entfernung des Liganden ausfällt, und dass der Metallgehalt in der Polymerlösung durch die Fällung und die anschließende Filtration um mindestens 95 % abnimmt,

15. Polymere, herstellbar nach dem Verfahren gemäß Anspruch 1,
**dadurch gekennzeichnet, dass**
sie mittels ATRP hergestellt wurden, eine Molekulargewichtsverteilung kleiner 1,5 aufweisen, einen Halogengehalt kleiner 0,1 Gew.-% aufweisen und zumindest eine Silylgruppe und eine Thioethergruppe an einem der Kettenenden aufweisen.

16. Lineare Polymere gemäß Anspruch 15,
**dadurch gekennzeichnet, dass**
sie mit einem bifunktionellen Initiator hergestellt wurden, einen Halogengehalt kleiner 0,1 Gew.-% aufweisen und an beiden Kettenenden Silylgruppen und Thioethergruppen aufweisen.

17. Lineare Polymere gemäß Anspruch 16,
**dadurch gekennzeichnet, dass**
sie mit einem bifunktionellen Initiator hergestellt wurden, einen Halogengehalt kleiner 0,01 Gew.-% aufweisen, eine ABA-Triblockstruktur und an beiden Kettenenden Silylgruppen und Thioethergruppen aufweisen.

18. Verwendung der gemäß einem der vorhergehenden Ansprüche aufgearbeiteten, silyltelechelen Polymere in Hotmelts, Klebstoffen, Dichtmassen, Heißsiegelmassen, harte oder weiche Schäume, für polymeranaloge Reaktionen, in kosmetischen Anwendungen, in Farben oder Lacken, als Abformmassen, als Vergussmassen, in Bodenbelägen, als Dispergiermittel, als Polymeradditiv oder in Verpackungen.

## Claims

1. Process for preparing polymers with silyl end groups,
**characterized in that**
halogen atoms at polymer chain ends are substituted by means of addition of a suitable silyl-functionalized sulphur compound, and **in that** the polymers are obtainable by polymerizing styrenes, alkyl acrylates and/or alkyl methacrylates and/or mixtures which consist predominantly of styrenes, alkyl acrylates and/or alkyl methacrylates.

2. Process for preparing polymers with silyl end groups according to Claim 1,
**characterized in that**
transition metal compounds are removed from polymer solutions by precipitating the transition metal compound by means of addition of a sulphur compound and then removing it by means of filtration.

3. Process for preparing polymers with silyl end groups according to Claim 1,
**characterized in that**
halogen atoms are removed simultaneously from polymers by substituting the halogen atoms to an extent of more than 90% by the addition of the sulphur compound.

4. Process for preparing polymers with silyl end groups,
**characterized in that**
said sulphur compounds from Claims 1 to 3 are the same sulphur compound and all three process steps proceed simultaneously.

5. Process for preparing polymers with silyl end groups according to Claim 4,
**characterized in that**
the sulphur compound is a mercaptan or another organic compound having a thiol group, **in that** said sulphur compound has an additional functionality, and **in that** the further functionality is a silyl group.

6. Process for preparing polymers with silyl end groups according to Claim 5,
**characterized in that**
the sulphur compounds are silyl-functionalized mercaptans of the formula
HS-R¹-((SiR²ₒ(OR³)ₚ)_{y}(SiR²ₙ(OR³)ₘ)_{z})ₓ
where:
R¹ is an alkyl radical having one to 20 carbon atoms,
x is from 1 to 10,
R² and R³ are each alkyl radicals having one to 20 carbon atoms,
o and p each mean numbers from 0 to 2, which add up to 2 in the case of a divalent silyl group, add up to 1 in the case of a trivalent silyl group and add up to 0 in the case of a tetravalent silyl group,
y is any number from 0 to 20,
z depends on the number of tri- or tetravalent, i.e. branching, silyl groups between R¹ and the end groups and is at least 1, and where m and n are each from 0 to 3, and add up to 3.

7. Process for preparing polymers with silyl end groups according to Claim 6,
**characterized in that**
the sulphur compounds are silyl-functionalized mercaptans of the formula
HS-R¹-(SiR²ₙ(OR³)ₘ
where:
R¹ is -CH₂-, -CH₂CH₂- or -(CH₂)₃-,
x is 1,
R² and R³ are ach methyl and/or ethyl groups, and m and n each mean numbers from 0 to 3, where m is 2 or 3.

8. Process for preparing polymers with silyl end groups according to Claim 7,
**characterized in that**
the sulphur compound is mercaptomethylmethyldiethoxysilane, 3-mercaptopropyltrimethoxysilane, 3-mercaptopropyltriethoxysilane or 3-mercaptopropylmethyldimethoxysilane.

9. Process for preparing polymers with silyl end groups according to Claim 1,
**characterized in that**
the sulphur compound is added after or during the termination of a polymerization, and **in that** the polymerization is by the ATRP process.

10. Process according to Claim 9,
**characterized in that**
the transition metal compound used as a catalyst in the polymerization is a copper compound.

11. Process according to Claim 10,
**characterized in that**
an initiator which has an active group X is used in the preceding polymerization, **in that** the active X group is Cl, Br, I, SCN and/or N₃, and **in that** the initiator may be mono-, di- or polyfunctional with regard to the active groups.

12. Process according to Claim 11,
**characterized in that**
the active X group on the chain ends of the polymers is substituted by the sulphur compound according to Claims 1-13 to give a thioether with release of an acid of the form X-H.

13. Process according to Claim 9,
**characterized in that**
the catalyst is combined before the polymerization with a nitrogen-containing chelate ligand which can enter into one or more coordinate bonds with the transition metal to give a metal-ligand complex, **in that** the ligand is protonated by the acid X-H, and **in that** the ligand is removed from the coordinated transition metal by the protonation.

14. Process according to Claim 13,
**characterized in that**
the transition metal is precipitated by the removal of the ligand, and **in that** the metal content in the polymer solution decreases by at least 95% as a result of the precipitation and the subsequent filtration.

15. Polymers preparable by the process according to Claim 1,
**characterized in that**
they have been prepared by means of ATRP, have a molecular weight distribution of less than 1.5, have a halogen content of less than 0.1% by weight and have at least one silyl group and one thioether group on one of the chain ends.

16. Linear polymers according to Claim 15, **characterized in that**
they have been prepared with a bifunctional initiator, have a halogen content of less than 0.1% by weight and have silyl groups and thioether groups on both chain ends.

17. Linear polymers according to Claim 16, **characterized in that**
they have been prepared with a bifunctional initiator, have a halogen content of less than 0.01% by weight, have an ABA triblock structure and have silyl groups and thioether groups on both chain ends.

18. Use of the silyl-telechelic polymers worked up according to one of the preceding claims in hotmelts, adhesives, sealant materials, heat-sealing lacquers, rigid or flexible foams, for polymer-analogous reactions, in cosmetic applications, in paints or varnishes, as moulding materials, as casting materials, in floor coverings, as dispersants, as polymer additives or in packagings.

## Revendications

1. Procédé pour la préparation de polymères présentant des groupes silyle terminaux, **caractérisé en ce que** des atomes d'halogène aux extrémités des polymères sont substitués par addition d'un composé soufré fonctionnalisé par silyle approprié et **en ce que** les polymères sont obtenus par polymérisation de styrènes, d'acrylates d'alkyle et/ou de méthacrylates d'alkyle et/ou de mélanges, qui sont principalement constitués de styrènes, d'acrylates d'alkyle et/ou de méthacrylates d'alkyle.

2. Procédé pour la préparation de polymères présentant des groupes silyle terminaux selon la revendication 1, **caractérisé en ce que** pour la séparation des composés de métal de transition des solutions de polymères, le composé de métal de transition est précipité par addition d'un composé soufré et ensuite séparé par filtration.

3. Procédé pour la préparation de polymères présentant des groupes silyle terminaux selon la revendication 1, **caractérisé en ce que**, pour l'élimination simultanée d'atomes d'halogène des polymères, les atomes d'halogène sont substitués à raison de plus de 90% par l'addition du composé soufré.

4. Procédé pour la préparation de polymères présentant des groupes silyle terminaux, **caractérisé en ce qu'**il s'agit, pour lesdits composés soufrés des revendications 1 à 3, du même composé soufré que **en ce que** les trois étapes de procédé se déroulent simultanément.

5. Procédé pour la préparation de polymères présentant des groupes silyle terminaux selon la revendication 4, **caractérisé en ce qu'**il s'agit, pour le composé soufré, d'un mercaptan ou d'un autre composé organique avec un groupe thiol, **en ce que** ledit composé soufré présente une fonctionnalité supplémentaire et **en ce qu'**il s'agit pour l'autre fonctionnalité, d'un groupe silyle.

6. Procédé pour la préparation de polymères présentant des groupes silyle terminaux selon la revendication 5, **caractérisé en ce qu'**il s'agit, pour les composés soufrés, de mercaptans fonctionnalisés par silyle de formule
HS-R¹-((SiR²ₒ(OR³)ₚ)_{y}(SiR²ₙ(OR³)ₘ)_{z})ₓ,
où
R¹ représente un radical alkyle comprenant un à 20 atomes de carbone
il s'agit, pour x, d'un nombre entre 1 et 10,
R² et R³ représentent à chaque fois des radicaux alkyle comprenant un à 20 atomes de carbone,
o et p représentent à chaque fois des nombres entre 0 et 2, dont la somme, dans le cas d'un groupe silyle divalent, vaut 2, dans le cas d'un groupe silyle trivalent, vaut 1 et dans le cas d'un groupe silyle tétravalent, vaut 0,
y est un nombre quelconque entre 0 et 20,
z dépend du nombre de groupes silyle trivalents ou tétravalents, c'est-à-dire formant des ramifications, entre R¹ et les groupes terminaux et est au moins égal à 1
et m et n valent à chaque fois des nombres entre 0 et 3, dont la somme vaut 3.

7. Procédé pour la préparation de polymères présentant des groupes silyle terminaux selon la revendication 6, **caractérisé en ce qu'**il s'agit, pour les composés soufrés, de mercaptans fonctionnalisés par silyle de formule
HS-R¹-(SiR²ₙ (OR³)ₘ),
où
R¹ représente -CH₂-, -CH₂CH₂- ou -(CH₂)₃-,
x vaut 1,
R² et R³ représentent à chaque fois des groupes méthyle et/ou éthyle,
m et n valent à chaque fois des nombres entre 0 et 3,
m vaut 2 ou 3.

8. Procédé pour la préparation de polymères présentant des groupes silyle terminaux selon la revendication 7, **caractérisé en ce qu'**il s'agit, pour le composé soufré, de mercaptométhylméthyldiéthoxysilane, de 3-mercaptopropyltriméthoxysilane, de 3-mercaptopropyltriéthoxysilane ou de 3-mercaptopropylméthyldiméthoxysilane.

9. Procédé pour la préparation de polymères présentant des groupes silyle terminaux selon la revendication 1, **caractérisé en ce que** le composé soufré est ajouté après ou pendant l'interruption d'une polymérisation et **en ce qu'**il s'agit d'une polymérisation selon le procédé ATRP.

10. Procédé selon la revendication 9, **caractérisé en ce qu'**il s'agit, pour le composé de métal de transition utilisé comme catalyseur dans la polymérisation, d'un composé cuivré.

11. Procédé selon la revendication 10, **caractérisé en ce qu'**on utilise dans la polymérisation préalable un initiateur qui présente un groupe actif X, **en ce qu'**il s'agit, pour le groupe actif X, de Cl, Br, I, SCN et/ou de N₃, et **en ce que** l'initiateur, par rapport aux groupes actifs, peut être monovalent, divalent ou polyvalent.

12. Procédé selon la revendication 11, **caractérisé en ce que** les groupes actifs X sont substitués aux extrémités de chaîne des polymères par le composé soufré selon les revendications 1-13 en formant un thioéther avec libération d'un acide de forme X-H.

13. Procédé selon la revendication 9, **caractérisé en ce que** le catalyseur est réuni, avant la polymérisation, avec un ligand de chélate contenant N, qui peut former une ou plusieurs liaisons de coordination avec le métal de transition en formant un complexe métal-ligand, **en ce que** le ligand est protoné par l'acide X-H, et **en ce que** le ligand est séparé par protonation du métal de transition coordiné.

14. Procédé selon la revendication 13, **caractérisé en ce que** le métal de transition précipite par l'élimination du ligand et **en ce que** la teneur en métal dans la solution polymère diminue d'au moins 95% par la précipitation et la filtration consécutive.

15. Polymères, pouvant être préparés selon le procédé selon la revendication 1, **caractérisé en ce qu'** i 1 s sont préparés par ATRP, présentent une répartition des poids moléculaires inférieure à 1,5, présentent une teneur en halogène inférieure à 0,1% en poids et présentent au moins un groupe silyle et un groupe thioéther en une des extrémités de chaîne.

16. Polymères linéaires selon la revendication 15, **caractérisés en ce qu'**ils sont préparés avec un initiateur difonctionnel, présentent une teneur en halogène inférieure à 0,1% en poids et présentent, aux deux extrémités de chaîne, des groupes silyle et des groupes thioéther.

17. Polymères linéaires selon la revendication 16, **caractérisés en ce qu'**ils sont préparés avec un initiateur difonctionnel, présentent une teneur en halogène inférieure à 0,01% en poids, présentent une structure ABA à trois blocs et présentent, aux deux extrémités de chaîne, des groupes silyle et des groupes thioéther.

18. Utilisation des polymères téléchéliques silyle préparés selon l'une quelconque des revendications précédentes, dans des masses fondues à chaud, des adhésifs, des masses d'étanchéité, des vernis thermoscellants, des mousses dures ou souples, pour des réactions analogues à des polymères, dans des utilisations cosmétiques, dans des encres ou des laques, comme masses de moulage, comme masses de coulage, dans des revêtements de sol, comme dispersants, comme additif pour polymères ou dans des emballages.
